(19) Europäisches Patentamt
European Patent Office
Office européen des brevets

(11) **EP 0 597 206 B1**

(12) **EUROPÄISCHE PATENTSCHRIFT**

(45) Veröffentlichungstag und Bekanntmachung des Hinweises auf die Patenterteilung:
**16.07.1997 Patentblatt 1997/29**

(51) Int. Cl.⁶: **B01D 53/32**, B01J 19/12, F01N 3/02

(21) Anmeldenummer: **93114391.1**

(22) Anmeldetag: **08.09.1993**

(54) **Verfahren zur Minderung von Russpartikeln in Abgasströmen**

Process for the reduction of soot particles in exhaust gas streams

Procédé de réduction des particules de suie dans des courants de gaz d'échappement

(84) Benannte Vertragsstaaten:
**DE FR GB**

(30) Priorität: **27.10.1992 DE 4236242**

(43) Veröffentlichungstag der Anmeldung:
**18.05.1994 Patentblatt 1994/20**

(73) Patentinhaber: **DORNIER GMBH**
**D-88004 Friedrichshafen (DE)**

(72) Erfinder:
• **Steinwandel, Jürgen, Dr. rer. nat.**
**D-88690 Uhldingen (DE)**
• **Willneff, Rainer**
**D-88677 Markdorf (DE)**
• **Ströer, Martin, Dr. rer. nat.**
**D-88090 Immenstaad (DE)**
• **Staneff, Theodor, Dipl.-Ing.**
**D-88697 Bermatingen (DE)**

(74) Vertreter: **Landsmann, Ralf, Dipl.-Ing.**
**Dornier GmbH**
**LHG**
**88039 Friedrichshafen (DE)**

(56) Entgegenhaltungen:
EP-A- 0 295 083         EP-A- 0 366 876
WO-A-91/03315          WO-A-91/16528
DE-A- 3 206 785        DE-A- 3 504 737
DE-A- 4 010 913        DE-A- 4 028 720

**Beschreibung**

Rußpartikel (anorganische Komponenten, graphitische C-Komponente sowie höhere aliphatische, alizyklische und aromatische Kohlenwasserstoffe) können bei allen technischen Verbrennungsprozessen mit kohlenstofftragenden Verbindungen auftreten.

Besonders gravierend ist die Problematik bei der Partikelemission von Dieselmotoren aufgrund des Gehältes an höhermolekularen Kohlenwasserstoffen sowie polykondensierten Aromaten (gesundheitsgefährdend bis möglicherweise cancerogen, z. B. 3, 4 Benzpyren und Nitroaromaten).

Wie die bisherigen Erfahrungen gezeigt haben, reichen motorische Maßnahmen bei Diesel-Verbrennungsmaschinen zu einer deutlichen Verminderung der emittierten Rußmasse nicht aus. Erschwerend kommt bei solchen Maßnahmen hinzu, daß eine Partikelreduktion durch motorische Maßnahmen im Regelfall eine Erhöhung der $NO_x$-Emission (im wesentlichen NO) zur Folge hat (z. B. durch Erhöhung der relevanten Brennraumtemperaturen).

Es ist daher notwendig, durch nachmotorische Maßnahmen eine Partikelreduktion zu erreichen. Dazu wird in erster Linie versucht, das Problem durch den Einbau von Partikelfiltern in den Abgaskanal anzugehen.

Durch den Rußablagerungsprozess verstopft das Filter im Lauf der Zeit immer mehr, was zu einer beträchtlichen Erhöhung des Abgasgegendrucks (Filterstaudruck) und damit zu einer Reduzierung der Maschinenleistung führt.

Bei technischen Verbrennungsprozessen mit hohem Luftüberschuß (z. B. Dieselmotoren) ist die freie Sauerstoffkonzentration im Abgas in jedem Fall ausreichend, um die Verbrennung der oxidierbaren Rußkomponenten grundsätzlich bewirken zu können. Dabei liegen die <u>absoluten</u> thermodynamischen Gleichgewichte bei allen in Frage kommenden Abgasbedingungen (Rußkonzentration, Sauerstoff-Partialdruck, Gesamtdruck und Temperatur) in Richtung quantitativer Oxidation zu Kohlendioxid und Wasser. Infolge reaktionskinetischer Kriterien (Aktivierungsenergie zur Rußzündung) werden bei rußbeladenen Partikelfiltern ohne Zusatzmaßnahmen die thermodynamisch favorisierten Zustände erst ab ca. 600°C hinreichend schnell realisiert. Diese Temperaturen stehen im Regelfall in Abgasen von Dieselmotoren (und auch anderen technischen Verbrennungen) nicht zur Verfügung. Eine Möglichkeit zur Zündung des Rußes auf den Partikelfiltern besteht in einer Beheizung des Filters (z. B. mit externen Brennern, durch elektrische Widerstandsheizung der Filter, durch elektromagnetische Filteraufheizung mittels Hochfrequenzfeldern).

Alle o. a. Methoden befinden sich derzeit in mehr oder weniger fortgeschrittenen Entwicklungsstadien.

Eine andere Möglichkeit besteht darin, die Zündtemperatur filteradsorbierten Rußes entweder durch entsprechend katalytisch aktive Substanzen (aufgebracht als Filterbeschichtung/Filterimprägnierung) oder durch Chemische Promotoren (Additive im Brennstoff oder separate Eindüsung in den Abgaskanal vor dem Partikelfilter) soweit abzusenken, daß die normalerweise nutzbaren Abgastemperaturen (ca. 200°C - 450°C) zum vollständigen Rußabbrand ausreichen.

In keinem Fall konnten bislang technisch brauchbare Lösungen auf der Basis von Partikelfiltersystemen realisiert werden.

Aufgrund der bislang weitestgehend negativen Erfahrungen mit Filtersystemen (insbesondere bei den speziellen Anforderungen bei PKW/NFZ-Dieselmotoren) kommt der Entwicklung filterloser Partikelminderungsverfahren besondere Bedeutung zu.

In diesem Zusamenhang ist ein nicht-reaktives Verfahren (Robert Bosch GmbH Stuttgart) erwähnenswert, wo Rußpartikel nach vorheriger Gasphasen-Agglomeration (z.B. elektrostatische Aufladung durch eine (gasdynamische) Zentrifugalabscheidung (Zyklon) in einen Auffangbehälter hinein abgeschieden werden.

EP-A-0 295 083 beschreibt ein Verfahren zur Entfernung von gasförmigen Schadstoffen wie z.B. NO, $SO_2$ und $CH_3Cl$ mittels chemisch aktiver Radikale erzeugt durch Elektronenstoßanregung in einem hochfrequenzinduziertem Plasma. Die zum Plasmadurchbruch notwendigen Feldstärken werden unter Verwendung einer "Reentrant Cavity" realisiert. Dabei werden in Hohlraumsystemen geringer Leerlaufgüte (Q≈1000) mittels innerhalb der Cavity (gesamter Reaktionsraum) angeordneter mechanisch abstimmbarer kapazitiver Koppelelemente die erforderlichen Feldstärkenerhöhungen realisiert.

Das Verfahren ist aus prinzipiellen physikalischen Gründen auf die Behandlung von im strengen Sinn gasförmigen Systemen beschränkt. Insbesondere problematisch wäre die in der Literaturstelle nicht offenbarte Verwendung von "Reentrant Cavities" in rußbeladenen Abgasströmen, weil die dabei unvermeidlichen Ablagerungen von graphitischen (elektrisch leitfähigen) Komponenten auf den metallischen Koppelelementen nicht eliminierbare Verstimmungen der Cavity und lokale Plasmadurchschläge verursachen können. In ungünstigen Fällen kann dies zur Zerstörung der Einrichtung führen. In jedem Fall wird die Ausbildung eines homogenen Volumenplasmas verhindert.

Aufgabe der Erfindung ist ein Verfahren zur Minderung von Rußpartikeln in Abgasströmen.

Erfindungsgegenstand ist die direkte oxidative Umwandlung von Rußpartikeln im sauerstoffhaltigen Medium einer freien Abgasströmung in einer hochfrequenzinduzierten stationären Plasmazone. Infolge des Vorhandenseins hochenergetischer Partikel im Plasma (Ionen/Elektronen; elektronisch, vibronisch und rotatorisch angeregte Ionen oder Neutralmoleküle, aktivierte Rußpartikel) werden die in Abschnitt 1 angesprochenen reaktionskinetischen Hemmungen (bezüglich normaler Oxidation von Rußpartikeln mit molekularem Sauerstoff) aufgehoben (weitgehende Reduzierung der Aktivierungsenergien). Dies führt in der Folge zu einer Sequenz stoßkontrollierter homogener Gasreaktionen mit hohen effektiven Reaktionsgeschwindigkeiten.

Hinsichtlich der technischen Anwendbarkeit des Verfahrens (Abgassysteme) sind typische <u>Hochdruckplasmen</u> (p ≥ 1 bar) erforderlich.

Bei der Plasmaerzeugung durch Hochfrequenzfelder hängt bei nichtmagnetischen Materialien die Einkopplung der HF-Energie von der komplexen Dielektrizitätskonstanten des Materials ab:

$$\varepsilon = \varepsilon' + i\,\varepsilon'' \tag{1}$$

bzw. vom dielektrischen Verlustwinkel δ:

$$\tan \delta = \varepsilon''/\varepsilon' \tag{2}$$

ε ist i. a. eine Funktion der Temperatur, und der Frequenz.

Die volumenspezifische Absorption von HF-Energie im Inneren eines HF-absorbierenden Materials ist gegeben durch:

$$P_{abs} = \pi\, \nu\, \varepsilon'\tan\delta\, |E|^2 \tag{3}$$

mit ν der Frequenz und E der mittleren elektrischen Feldstärke im absorbierenden Volumen

$$\varepsilon_o = 8{,}859 \cdot 10^{-12}\ \text{Asec}^{'}\text{Vm}.$$

Für Materie, deren Verluste überwiegend durch die elektrische Leitfähigkeit definiert werden, gilt:

$$\varepsilon'' = \sigma/2\pi \cdot \nu \tag{4}$$

mit der elektrischen Leitfähigkeit σ in $(\Omega m)^{-1}$. Damit ergibt sich für die umsetzbare Verlustleistungsdichte:

$$P_{abs} = \frac{\sigma}{2}\, |E|^2 \tag{5}$$

Das in ein absorbierendes Volumen eindringende elektromagnetische Feld wird durch Absorption geschwächt. Dadurch ergibt sich je nach Materie und Frequenz des e. m. Feldes eine begrenzte Eindringtiefe $d_c$:

$$d_c = c/2\pi\nu\, \left(\frac{2 \cdot \varepsilon_o}{\varepsilon'((1+\tan^2\delta)^{\frac{1}{2}} -1)}\right)^{\frac{1}{2}} \tag{6}$$

mit $c = 3.10^8$ m/sec; Lichtgeschwindigkeit.

Bei der Plasmaerzeugung durch HF-Energie ist zu unterscheiden zwischen dem Prozess der Plasmazündung und dem Prozess der Aufrechterhaltung eines stationären Plasmas.

Bei Gasen ist die elektrische Leitfähigkeit σ gering, so daß vergleichsweise hohe lokale Feldstärken zur Plasmazündung (Durchbruch) erforderlich sind. In Luft betragen solche Durchbruchfeldstärken zwischen 10 - 25 $\frac{kV}{cm}$.

Sobald jedoch ein solcher Plasmadurchschlag realisiert wurde, ändern sich die relevanten e. m. Stoffeigenschaften drastisch (z. B. der komplexe Brechungsindex ε in Gestalt hauptsächlich des Imaginärteils iε'' und damit gen. (4) die Leitfähigkeit σ).

Insbesondere die Leitfähigkeit σ ändert sich aufgrund des Vorliegens freier Ladungsträger um mehrere Zehnerpotenzen.

Die elektrische Leitfähigkeit eines vollionisierten Plasmas (volles thermodynamisches Gleichgewicht - VTG - oder lokales thermodynamisches Gleichgewicht - LTG -) kann in allgemeiner Form aus der Boltzmannschen Stoßgleichung unter der Annahme eines idealen Lorentz-Gases (vollionisiertes Gas, keine Elektronenwechselwirkung, ruhende Ionen) abgeleitet werden.

Es ergibt sich:

$$\sigma = 0{,}58 \; \frac{64 \, (2\pi)^{1/2} \, \varepsilon_o^2 \, k_B^{3/2}}{e_o^2 \, (m_{el})^{1/2} \, \ln A} \; T^{3/2} \tag{7}$$

$$A = \frac{12 \, \pi \, (\varepsilon_o k_B)^{3/2}}{e_o^3} \; T^{3/2} \, N_{el}^{-1/2} \tag{8}$$

($e_o$: elektrische Elementarladung, $m_{el}$: Elektronennasse, $N_{el}$: Teilchendichte Elektronen).
Bei VTG- und LTG-Bedingungen gilt für $N_{el}$ die <u>Saha-Eggert-Gleichung:</u>

$$\frac{N_{el} \, N_i^+}{N_a} = 2 \, \frac{Z_i(T)}{Za(T)} \, \frac{(2\pi m_{el} k_B)^{3/2}}{h^3} \cdot T^{3/2} \, \exp(-E_i/k_B T) \tag{9}$$

($N_i^+$    : Teilchendichte Ionen,
$N_a$    : Teilchendichte Neutralgasmoleküle,
$Z_{i,a}$    : Systemzustandssummen,
$E_i$    : Ionisationsenergie).

Die temperaturabhängigen elektrischen Leitfähigkeiten von VTG- und LTG-Plasmen werden in erster Linie durch die Stoßquerschnitte zwischen freien Elektronen bestimmt, sind also letztlich proportional zur Anzahldichte $N_{el}$ der freien Elektronen.

Die Anwesenheit erheblicher Konzentrationen freier Ladungsträger nach erfolgter Plasmazündung beeinflußt letztlich das weitere Verhalten des stationären Plasmas bezüglich der Einkopplung (Aufrechterhaltung des Plasmazustandes) von HF-Leistung.

Es stellt sich somit die Frage nach der Ausbreitungsmöglichkeit e. m. Wellen in einem (vollionisierten) Plasma.

In solchen Medien können sich verschiedenartigste e. m. Wellen ausbilden aufgrund unterschiedlicher Eigenschaften des Elektronen- und Ionengases sowie folgender, beschleunigungswirksamer Prozesse:

- Elektrostatische (Coulomb)-Kräfte
- Magnetische (Lorentz)-Kräfte
- Kräfte resultierend aus Viskositäten (Stokes-Kräfte)
- Kräfte resultierend aus Druckgradienten

Für den Spezialfall ausschließlicher Coulomb-Wechselwirkung ohne stationäres Magnetfeld mit den zusätzlichen Randbedingungen verschwindender Dämpfung, $\sigma \to \infty$, Ladungserhaltung und Quasi-Neutralität im Plasma gilt für ebene e. m. Wellen:

$$\Delta E - (\omega_p^2/c^2) \, E - \frac{1}{c^2} \partial^2 E/\partial t^2 = 0 \tag{10}$$

mit der Dispersionsrelation:

$$\omega_p = (N_{el} \, e_o^2/(m_{el} \, \varepsilon_o))^{\frac{1}{2}} \tag{11}$$

$\omega_p$ wird als charakteristische Plasma(Langmuir)-Frequenz bezeichnet.

Danach können sich transversale elektromagnetische Wellen in einem stationären Plasma nur dann ausbreiten, wenn $\omega > \omega_p$ gilt. Für $\omega < \omega_p$ kommt es zu einem cut-off infolge Totalreflexion der einlaufenden elektromagnetischen Wellen (keine weitere HF-Energieabsorption), und der Plasmazustand bricht zusammen.

<u>Beispiel:</u>

Bei einem VTG/LTG-Stickstoffplasma unter Verwendung einer Hochfrequenz von 2,46 GHz (Kaushalts-Mikrowellenmagnetrons) sind elektromagnetische Wellen dieser Frequenz ($\omega_p$) ab ca. $7{,}5 \cdot 10^{10}$ cm$^{-3}$ freier Elektronenkonzen-

tration nicht mehr ausbreitungsfähig. Dies entspricht einer Plasmatemperatur von ca. 5000 K.

Bei Anwesenheit stationärer elektrischer und magnetischer Felder werden zusätzliche Möglichkeiten für absorptive Plasmazustände (in Erweiterung zu (11)) eröffnet. Im besonders wichtigen Fall der Übertragung stationärer Magnetfelder der Induktion B sind dies die Zustände der <u>Elektronen- und Ionenzyklotronfrequenzen.</u>

Ausgehend von der Definition der Lorentzkraft ($F_L = [vxB]$) und ihrer Wirkung als Zentrifugalkraft ($F_L = m v^2/r$) ergibt sich allgemein für die Gyrationsfrequenzen:

$$\omega_g = v/r = (e_o/m) \cdot B \tag{12}$$

(bei einfacher Ionisierung)

$m = m_{el}$ : Elektronenzyklotronresonanz
$m = m_{Ion}$ : Ionenzyklotronresonanz

Für das Beispiel der Plasma-Erzeugungsfrequenz von 2,46 GHz (s. o.) berechnet sich die notwendige Induktion B zu 0,0876 Tesla (T) für Elektronenzyklotronresonanz.

Damit ergeben sich zusätzliche Möglichkeiten zur Plasmaaufrechterhaltung, falls tatsächlich das Langmuirkriterium (11) eine weitere Wellenausbreitung im Plasma verhindern sollte.

Die o. a. elektrodynamischen Kriterien zur Plasmazündung/Plasmaaufrechterhaltung mittels Hochfrequenz lassen sich wie folgt technisch realisieren: Bei Verwendung typischer Radiofrequenzen (RF, ca. 10 - 100 MHz) werden hohe Feldstärken E im Regelfall durch <u>induktive Kopplung</u> durch eine das Probenvolumen umfassende Spule als Bestandteil eines RF-Schwingkreises erzeugt (inductive coupled plasma - ICP).

Grundsätzlich möglich ist auch eine kapazitive RF-Einkopplung möglich, wobei das Probenvolumen durch einen Kondensator abgeschlossen ist.

Bei der Verwendung von typischen Mikrowellenfrequenzen (MW-GHz-Bereich) werden die elektromagnetischen Wellen im Regelfall über Hohlleiter geführt. Die Erzeugung der Hochfrequenz erfolgt entweder durch Magnetron-Systeme (z. B. Standard-MW-Technologie 2,46 GHz) oder Wanderfeldröhren (z. B. Klystrons, Frequenzen oberhalb 10 GHz im hohen Leistungsbereich cw-Radar, Pulsradar).

Zur Erzeugung hoher Feldstärken bei Plasmaanwendungen sind folgende Konfigurationen möglich:

- Feldverdichtung (E-Vektor) in Rechteck-Hohlleitersystemen, z. B. R26 für 2,46 GHz-Technologie ($H_{10}$-Geometrie). Zusätzliche Feldkonzentrationen im Hohlleiter durch <u>kapazitiv wirkende Stempel</u> (Stubs).
- Anregung elektrischer oder magnetischer Grundmodes (z. B. $E_{010}$, $H_{111}$) oder höherer Moden in <u>Hohlraumresona-toren (zylindrisch).</u>

In beiden Fällen ist es grundsätzlich möglich, die zu einer stationären Plasmaerzeugung notwendige primäre Durchbruchfeldstärke zu erreichen.

Es ist darüber hinaus möglich, die zum Plasmadurchbruch notwendigen elektrischen Feldstärken durch Erhöhung der (Gas)Leitfähigkeit $\sigma$ abzusenken, beispielsweise durch Einspeisung von Elektronen/Ionen über eine geeignete Anordnung (Zündflamme, Feldemission, Hilfsplasma über Koronaentladung oder Bogen/Funkenentladung).

Eine weitere Möglichkeit besteht darin, zur Plasmazündung (Durchschlag) einen Kurzzeit-HF-Puls (Pulsbreite ca. 1 msec) dem stationären Anregungsfeld zu überlagern.

Die im folgenden beschriebenen Ausführungsbeispiele zur Partikelminderung in rußbeladenen stationären Abgasströmungen mittels eines HF-induzierten Plasmas basieren auf der 2,46 GHz-MW-Technologie.

Die Erfindung wird nachfolgend anhand von Ausführungsbeispielen und Versuchsergebnissen näher erläutert, wobei mehrere Figuren beigefügt sind.

Es zeigen:

Fig. 1:     ein Ausführungsbeispiel eines Hohlleitersystems
Fig. 2a:    ein Plasma im Abgas eines Acetylenbrenners (Foto)
Fig. 2b:    einen Resonator
Fig. 3:     einen Hohlraumresonator mit Plasmazone (Foto)
Fig. 4:     ein Diagramm - Abhängigkeit der Rußbeladung von der zeit bei Vollastbetrieb des Motors
Fig. 5:     ein Verfahrensfließbild der Rußminderung
Fig. 6:     ein Diagramm der Versuchsergebnisse

Zur Plasmaerzeugung mit MW-Frequenzen (z. B. 2,46 GHz) sind folgende Schritte notwendig

- Erzeugung der MW-Strahlung und Einkopplung derselben in einen Wellenleiter
- Ableitung der Welle im Wellenleiter
- Auskopplung der Welle in das Plasma-Reaktionsgas.

Zur Erzeugung von Mikrowellen im Frequenzband 2,46 GHz stehen preisgünstige und robust aufgebaute Magnetrons bis 5 kWatt HF-Leistung zur Verfügung. Höhere Leistungen erfordern aufwendige Kühlsysteme. Zur Ableitung der Mikrowellen werden im Regelfall Hohlleiter eingesetzt. Diese lassen aufgrund ihrer genau zu definierenden Geometrie nur ganz bestimmte Wellentypen zu.

Konzeption Rechteckhohlleiter

Die Abmessungen eines Hohlleitersystems sind entscheidend bezüglich der prinzipiellen Wellenausbreitungsmöglichkeit bei vorgegebener Frequenz.

Man unterscheidet zwischen transversal-elektrischen ($E_{mn}$) und transversal-magnetischen ($H_{mn}$)-Wellen. Die Indizes m, n bezeichnen die Anzahl der Wellenmaxima (Amplituden) in X- bzw. Y-Richtung. Die stabilste Wellenform in einem Rechteckhohlleiter ist die sog. $H_{10}$-Welle. Diese hat die größte kritische Wellenlänge (Grenzwellenlänge $\lambda_k$). Der Hohlleiter läßt sich daher so dimensionieren, daß keine Ausbreitung eines anderen Wellentyps möglich ist.

Die Grenzwellenlänge berechnet sich wie folgt:

$$\lambda_k = 2/[(m/a)^2 + (n/b)^2]^{1/2} \tag{65}$$

für die $H_{10}$-Welle gilt (m = 1, n = 0)

$$\lambda_k = 2 \cdot a \tag{66}$$

Dämpfungsarme Rechteck-Hohlleitersysteme weisen im Normalfall ein Breiten- zu Höhenverhältnis a/b = 2 auf.

Es ist zusätzlich zu beachten, daß die Hohlleiterwellenlänge $\lambda_H$ größer ist als die Freiraumwellenlänge $\lambda_o$. Verlustfrei gilt:

$$\lambda_H = \lambda_o/[(1 - \lambda_o/\lambda_k)^2]^{1/2} \tag{67}$$

Für 2,46 GHz ergibt sich somit eine Hohlleiter-Wellenlänge (R26) des $H_{10}$-Grundmodes von 171,97 mm.

Zur Konstruktion eines Hohlleiters für stationäre Plasmaexperimente sind noch folgende physikalische Randbedingungen wesentlich:

- Die Auskopplung der Mikrowelle sollte in einem Maximum des E-Feldes erfolgen
- Zum Feinabgleich sind Stubs (Abstimmstifte) in definierten Abständen im Hohlleiter notwendig.

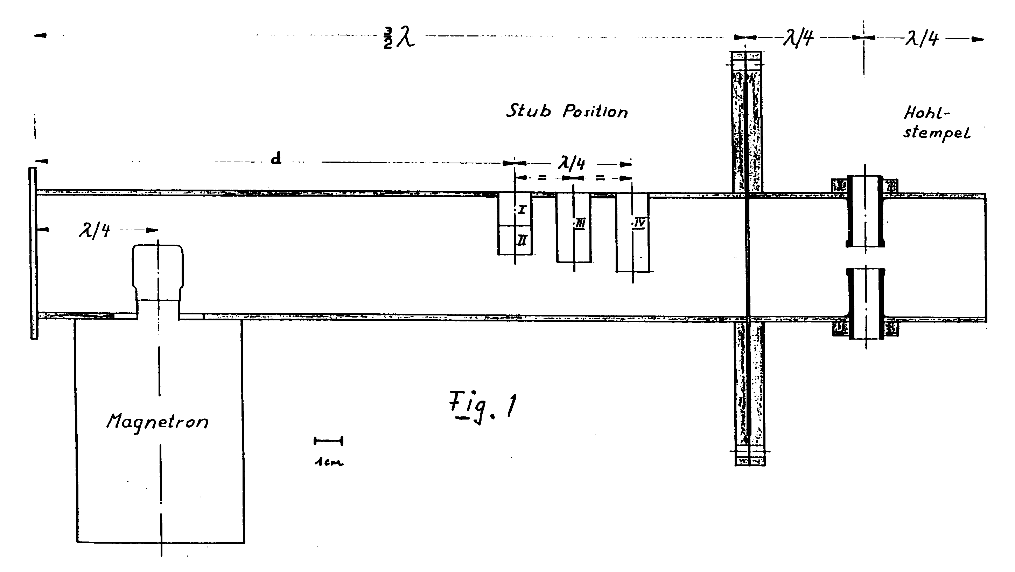

Fig. 1 zeigt die Version eines R26-Hohlleitersystems, das sich zur Herstellung stationärer Plasmen als geeignet erwies.

Die Breite a des Hohlleiters beträgt 86,36 mm, die Höhe b 43,18 mm.

Die Längenmaße sind der Fig. 1 zu entnehmen. Die Auskopplung der Mikrowelle in das Plasma-Reaktionsgas erfolgt kapazitiv durch zwei Hohlstempel $\lambda_{h/4}$ vor dem offenen Ende des Hohlleiters. Durch die Hohlstempel wird das Reaktionsrohr geführt.

Konzeption Hohlraumresonator

Die zum Zünden eines Plasmas im Abgasstrom notwendige Feldstärke kann in Hohlraumresonatoren auch bei Atmosphärendruck erzielt werden. Obwohl prinzipiell beliebige Formen und Moden möglich sind, erscheint der $E_{010}$-Mode des Zylinderresonators aufgrund der Feldverteilung besonders geeignet.

Die Eigenfrequenz eines Zylinderresonators mit Radius R im $E_{010}$-Mode ist unabhängig von dessen Länge gegeben durch

$$\nu = 2.405c/2\pi R$$

Bei einer Resonanzfrequenz von 2.46 GHz ergibt dies einen Radius von 47 mm. Die Güte bei Leistungsanpassung (halbe Leerlaufgüte) berechnet sich zu

$$Q = (\sigma/\pi\varepsilon_0\nu)^{\frac{1}{2}}\ 2.405/(4^*(1+R/L))$$

Um den Grundmode stabil zu betreiben, darf die Länge L maximal 2R betragen. In diesem Fall ergibt sich für einen Messingresonator die Güte Q = 7750.

Aus der Güte und der Verlustleistung $P_d$ im Resonator kann die maximale Feldstärke gemäß

$$E^2 = 2Z_0/(2.405\pi\mu J_1^2(2.405))\ QP_d/LR$$

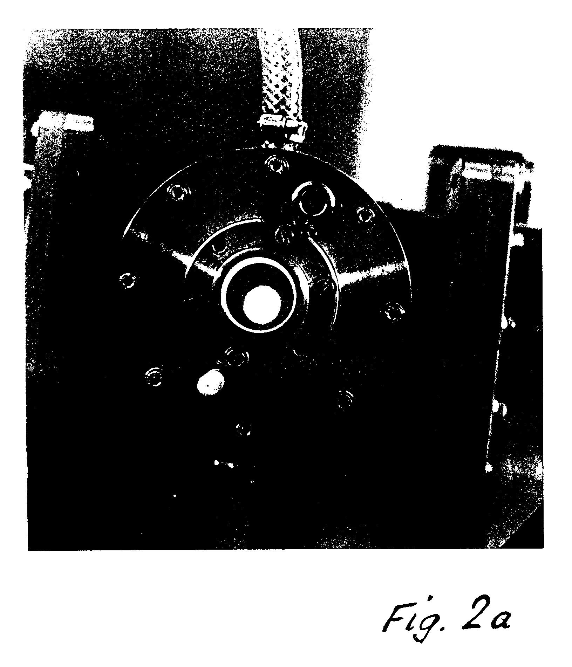

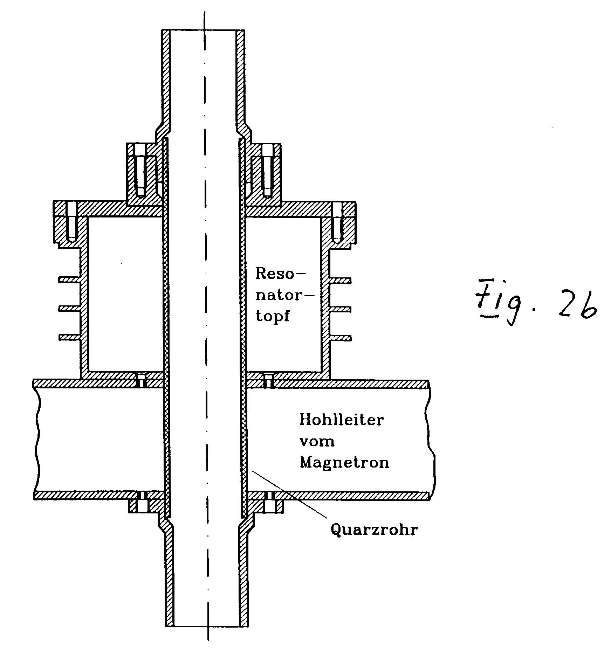

berechnet werden. Es wird also eine ca. fünfzigfache Feldüberhöhung gegenüber dem R26 Hohlleiter erzielt (bei 800 W Verlustleistung ca. 9 kV/cm). Experimente haben gezeigt, daß diese Feldstärke ausreicht, um im Abgas eines Acetylenbrenners ein Plasma zu zünden und stabil zu betreiben (Fig. 2a).

Die Anregung des Resonators kann grundsätzlich über Antennen (induktiv oder kapazitiv) oder durch Koppellöcher erfolgen. Eine bevorzugte Anordnung zeigt Fig. 2b. Hier dient eine jeweils in beiden Stirnflächen angebrachte zentrale Kreislochblende sowohl der Anregung des Resonators als auch der Abgasführung. Um Verschmutzungen des Resonators zu vermeiden, erfolgt die Gasführung durch ein Rohr mit geringer Mikrowellenabsorption (Quarz, Teflon, etc...). Die Lage und die Dimensionierung des Koppellochs sind entscheidend für die Leistungsanpassung.

Nachweis Wirkungsprinzip

Zum Nachweis des grundsätzlichen Wirkungsprinzips der plasmainduzierten Oxidation von Partikeln wurde zunächst ein synthetisches Abgas folgender Zusammensetzung eingesetzt:

90 % Stickstoff
10 % Sauerstoff
Acetylen-Ruß

Der Syntheseruß wurde kontinuierlich mittels eines speziellen Acetylenbrenners erzeugt. Auf diese Weise war es möglich, deutlich höhere Partikelkonzentrationen zu erreichen, als diese normalerweise, z. B. bei Dieselmaschinen, zur Verfügung stehen.

Dadurch war es möglich, die grundsätzliche Wirkungsweise (Beispiel Plasmaausbildung in einem 2,46 GHz-R26 Rechteckhohlleiter) visuell nachzuweisen.

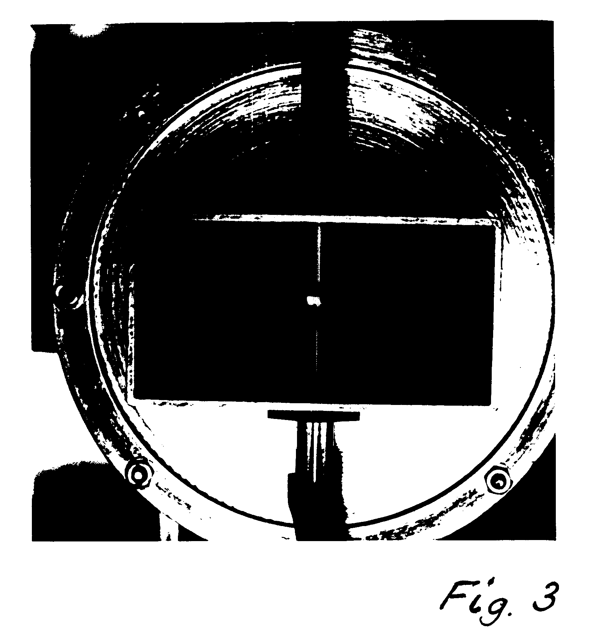

Der (visuelle) Nachweis des Wirkungssprinzips ist in Fig. 3 (Ansicht MW-Hohlraumresonator mit Plasmazone) gezeigt.

Das Abgasrohr ist an der Stelle maximaler elektrischer Feldstärke durch den offenen R26-Hohlleiter geführt. Die Führung erfolgt koaxial durch metallische Hohlzylinder (kapazitive Kopplung) zur Erhöhung der Felddichte zum Plasmadurchschlag. In Fig. 3 ist die Strömungsrichtung des Abgases von oben nach unten.

Am oberen Einlauf ist die Partikelbeladung des Abgases erkennbar. Im Ablaufrohr nach der Plasmazone ist keine visuell nachweisbare Partikelbeladung mehr erkennbar.

Partikelminderung im Abgas eines Dieselmotors

Verwendet wurde ein 300 cm³ Einzylinder Direkteinspritzmotor mit maximaler Wellenleistung von 4,2 kWatt bei 3000 min⁻¹.

Lastvariationen sind realisierbar über einen wellengekoppelten Einphasen-Wechselstromgenerator mit elektronisch variabler Last.

Die Rußpartikelbestimmung im Abgas vor und nach der Plasmazone wurde über die Methode der Schwärzungszahl vorgenommen (TÜV zugelassenes photometrisches Verfahren der Robert Bosch GmbH Stuttgart).

Sonstige flüchtige Abgaskomponenten wurden über eine on-line FTIR (Fourier Transform Infrarot)-Apalytik bestimmt (Heißgasmessung mit 1 m Langweg-Gasküvette bei 185°C).

Die absolute Volumenstrommessung erfolgt gleichfalls über das FTIR-Spektrometer mittels der Methode chemisch inerter Tracergase. Im vorliegenden Fall wurde Kohlenstofftetrafluorid ($CF_4$) eingesetzt. Die Absoluteichung der halbquantitativen Schwärzungszahlmethode (Korrelation der emittierten Partikelmasse mit der Schwärzungszahl) wurde gravimetrisch durch Verwendung von Keramik-Monolith-Partikelfiltern (Corning Glass) für unterschiedliche stationär gefahrene Lastzustände des Dieselmotors vorgenommen.

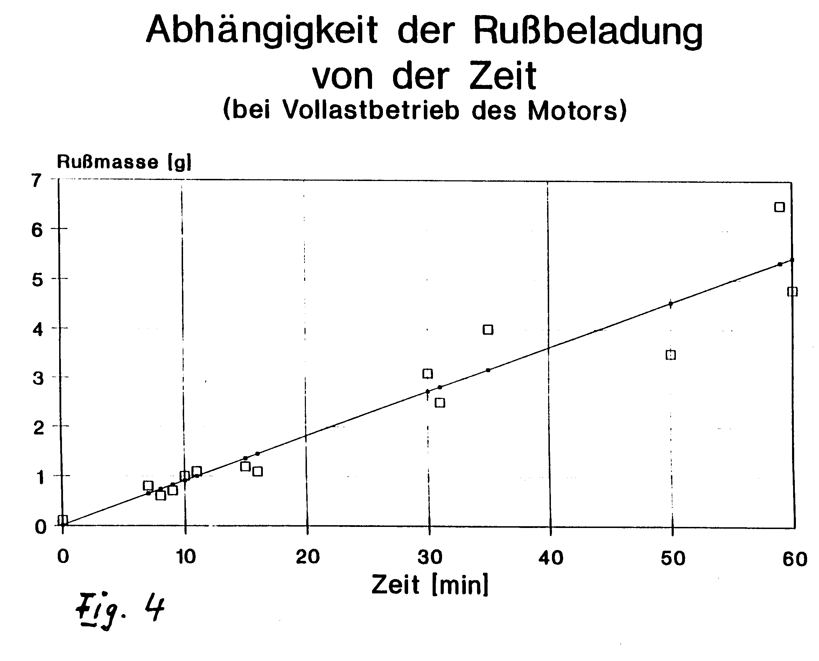

Fig. 4 zeigt exemplarisch die Abhängigkeit der Filterbeladung von der Beladungszeit für Vollastbedingungen der Maschine.

Aus der gemessenen Filterbeladung sowie unter Berücksichtigung des Filter-Rückhaltegrades (ca. 85 % für Corning Glass Cordierit-Monolithfilter) ergibt sich eine bei Vollastbedingungen frei emittierte Partikelmasse von 0,35 g/Nm$^3$.

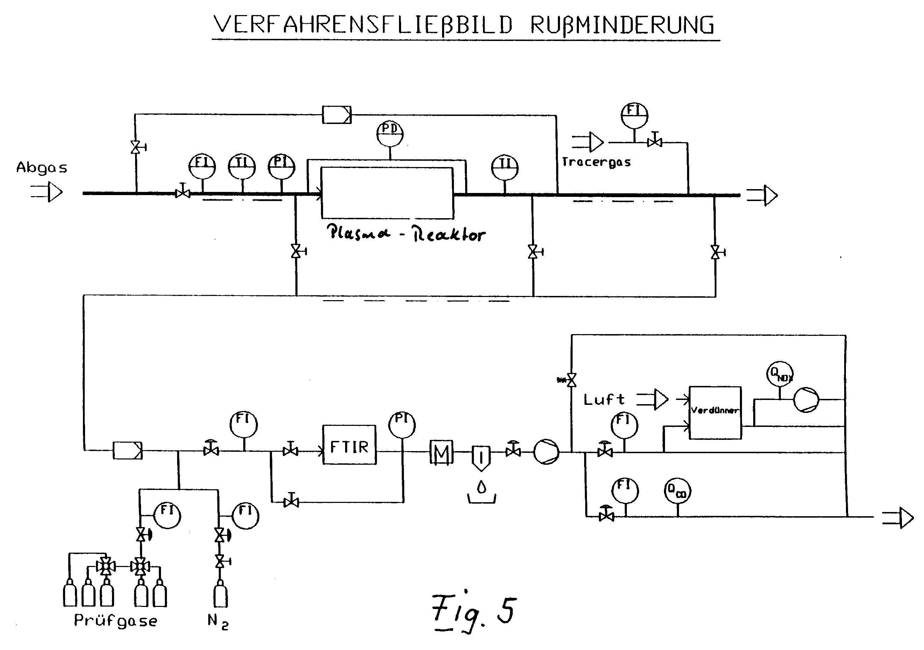

Fig. 5 zeigt ein vereinfachtes Verfahrensfließbild der Experimentalanlage.

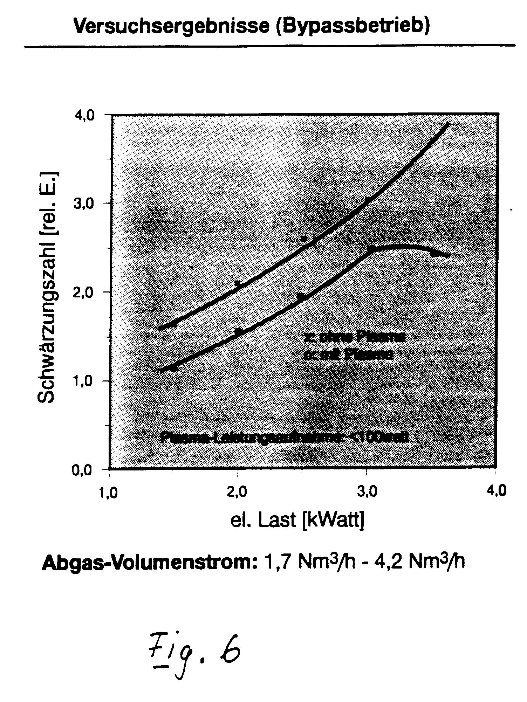

Fig. 6 zeigt eine zusammenfassende Darstellung der plasmainduzierten Partikelminderung im nutzbaren Lastbereich des Dieselmotors für das Beispiel der Plasmazonenerzeugung in einem 2,46 GHz R-26-Mikrowellenhohlleiter.

Die aktive Plasmazone beinhaltet ein reaktives Volumen von ca. 0,5 cm$^3$.

Bei Vollastbedingungen entspricht dies einer mittleren Verweilzeit des partikelhaltigen Abgases in der Plasmazone von 4,5 · 10$^{-4}$ sec (0,45 msec). Die Temperatur nach der Plasmazone wurde zu 623 K (stationär) bestimmt.

Der auf die gesamtemittierte Rußmasse bezogene Minderungsgrad beträgt bei Vollast 40 %.

## Patentansprüche

1. Verfahren zur kontinuierlichen Entfernung von Rußpartikeln aus dem Abgas eines unter Luftüberschuß durchgeführten technischen Verbrennungsprozesses , **dadurch gekennzeichnet,** daß mittels eines stationären oxidativen Plasmaprozesses ein Partikelabbrand mit dem freien Sauerstoff des Abgases bewirkt wird.

2. Verfahren nach Anspruch 1 **dadurch gekennzeichnet,** daß mittels eines elektromagnetischen Hochfrequenzfeldes ein stationäres Hochdruckplasma erzeugt wird.

3. Verfahren nach Ansprüchen 1 und 2 **dadurch gekennzeichnet,** daßzur Plasmaerzeugung typische Mikrowellenfrequenzen verwendet werden.

4. Verfahren nach Ansprüchen 1 bis 3 **dadurch gekennzeichnet,** daß Mikrowellen-Magnetrons der Standardtechnologie 2,46 GHz zur Anwendung kommen.

5. Verfahren nach Ansprüchen 1 bis 4 **dadurch gekennzeichnet,** daß die Plasmaerzeugung in einem Rechteckhohlleiter im H$_{10}$-Mode erfolgt.

6. Verfahren nach Ansprüchen 1 bis 5 **dadurch gekennzeichnet,** daß die Plasmaerzeugung in einem Hohlraumresonator im E$_{010}$-Mode angeregt aus einem Rechteckhohlleiter im H$_{10}$-Mode durch Iriskopplung erfolgt.

7. Verfahren nach Ansprüchen 1 bis 6 **dadurch gekennzeichnet,** daß zur Plasmazündung ein Kurzzeit-HF-Puls eingesetzt wird.

8. Verfahren nach Ansprüchen 1 bis 7 dadurch **gekennzeichnet,** daß zur Plasmazündung elektrische Ladungsträger mittels Flammenionisation, Feldemission, Koronaentladung, Funkenentladung, Bogenentladung oder ionisierende korpuskular- oder elektromagnetische Strahlung verwendet werden.

9. Verfahren nach Ansprüchen 1 bis 8 **dadurch gekennzeichnet,** daß sich die Plasmazone in zusätzlichen stationären elektrischen und magnetischen Feldern befindet.

## Claims

1. Method for the continuous removal of soot particles from the exhaust gas of a technical combustion process carried out under excess air, **characterized in that** burning-up of particles with the free oxygen of the exhaust gas is brought about by means of a stationary oxidative plasma process.

2. Method according to Claim 1, **characterized in that** a stationary high-pressure plasma is produced by means of a high-frequency electromagnetic field.

3. Method according to Claims 1 and 2, **characterized in that** typical microwave frequencies are used for the plasma production.

4. Method according to Claims 1 to 3, **characterized in that** standard 2.46 GHz-technology microwave magnetrons are used.

5. Method according to Claims 1 to 4, **characterized in that** the plasma production takes place in the H$_{10}$-mode in a

rectangular wave guide.

6. Method according to Claims 1 to 5, **characterized in that** the plasma production takes place by iris coupling in the $H_{10}$-mode from a rectangular wave guide in a resonant cavity excited in the $E_{010}$-mode.

7. Method according to Claims 1 to 6, **characterized in that** a short-time HF pulse is used for the plasma ignition.

8. Method according to Claims 1 to 7, **characterized in that** electrical charge carriers are used for the plasma ignition by means of flame ionization, field emission, corona discharge, spark discharge, arc discharge or ionizing particle or electromagnetic radiation.

9. Method according to Claims 1 to 8, **characterized in that** the plasma zones are disposed in additional stationary electric and magnetic fields.

**Revendications**

1. Procédé d'élimination continue de particules de suie des gaz d'échappement d'un procédé technique de combustion réalisé sous un excès d'air, caractérisé en ce qu'une combustion des particules avec l'oxygène libre du gaz d'échappement est provoquée à l'aide d'un procédé plasmatique oxydant stationnaire.

2. Procédé selon la revendication 1, caractérisé en ce qu'un plasma haute pression stationnaire est généré à l'aide d'un champ électromagnétique à haute fréquence.

3. Procédé selon les revendications 1 et 2, caractérisé en ce que des fréquences de micro-ondes typiques sont utilisées pour la génération du plasma.

4. Procédé selon les revendications 1 à 3, caractérisé en ce que sont utilisés des magnétrons à micro-ondes de la technologie standard 2,46 GHz.

5. Procédé selon les revendications 1 à 4, caractérisé en ce que le plasma est généré dans un guide d'ondes rectangulaire en mode $H_{10}$.

6. Procédé selon les revendications 1 à 5, caractérisé en ce que le plasma est généré dans une cavité résonnante en mode $E_{010}$ sur excitation par couplage d'iris depuis un guide d'ondes rectangulaire en mode $H_{10}$.

7. Procédé selon les revendications 1 à 6, caractérisé en ce qu'une impulsion H.F. de courte durée est mise en oeuvre pour l'amorçage du plasma.

8. Procédé selon les revendications 1 à 7, caractérisé en ce que sont utilisés pour l'amorçage du plasma des porteurs de charge électrique à l'aide de l'ionisation de flammes, émission de champ, décharge en effet corona, décharge à étincelles, décharge en arc ou rayonnement ionisant corpusculaire ou électromagnétique.

9. Procédé selon les revendications 1 à 8, caractérisé en ce que la zone plasmatique se trouve dans des champs stationnaires électriques et magnétiques supplémentaires.

$\frac{3}{2}\lambda$

$\lambda/4$  $\lambda/4$

Stub Position

Hohlstempel

d

$\lambda/4$

$\lambda/4$

I

II

III

IV

Magnetron

1cm

*Fig. 1*

EP 0 597 206 B1

Fig. 2a

Fig. 26

Quarzrohr

Hohlleiter
vom
Magnetron

Resonatortopf

Fig. 3

# Abhängigkeit der Rußbeladung
## von der Zeit
### (bei Vollastbetrieb des Motors)

Rußmasse [g] vs Zeit [min]

*Fig. 4*

# VERFAHRENSFLIEßBILD RUßMINDERUNG

Abgas

Plasma - Reaktor

Tracergas

PD

FI  TI  PI

TI

FI

Luft

Verdünner

$Q_{NOx}$

$Q_{CO}$

FTIR

PI

M

FI

FI

FI

FI

FI

Prüfgase        $N_2$

*Fig. 5*

EP 0 597 206 B1

## Versuchsergebnisse (Bypassbetrieb)

**Abgas-Volumenstrom:** 1,7 Nm³/h - 4,2 Nm³/h

*Fig. 6*